# EUROPÄISCHE PATENTSCHRIFT

(11) **EP 0 368 150 B1**
(45) Veröffentlichungstag und Bekanntmachung des Hinweises auf die Patenterteilung: **25.05.1994**
(21) Anmeldenummer: 89120301.0
(22) Anmeldetag: 02.11.1989
(51) Int. Cl.: H02G 11/00, H01R 35/02

(54) **Vorrichtung zur Stromübertragung zwischen zwei relativ zueinander bewegbaren Endstellen**
Device for transferring current between two terminals moving relatively to one another
Dispositif de transfert de courant entre deux terminaisons mobiles l'une par rapport à l'autre

(30) Priorität: 10.11.1988 DE 3838114
(43) Veröffentlichungstag der Anmeldung: 16.05.1990
(73) Patentinhaber: kabelmetal electro GmbH, 30002 Hannover (DE)
(72) Erfinder: Schauer, Friedrich, Dipl.-Ing., D-8501 Heroldsberg (DE); Wolff, Manfred, D-8501 Schwarzenbruch (DE)

(56) Entgegenhaltungen:
- DE-A- 3 641 706

## Beschreibung

Die Erfindung betrifft eine Vorrichtung zur Stromübertragung zwischen zwei Endstellen, zwischen denen eine der elektrischen Verbindung dienende, in Windungen verlaufende Flachbandleitung mit mindestens zwei elektrischen Leitern angeordnet ist, deren Länge wesentlich größer als der Abstand der beiden Endstellen voneinander ist, bei welcher mindestens eine der beiden Endstellen relativ zu der anderen bewegbar ist, bei welcher die Enden der Flachbandleitung an den Endstellen zur Bildung von Anschlußenden um 90° gefaltet sind und bei welcher die gefalteten Enden der Flachbandleitung jeweils von einem vorgefertigten Formteil aus Isoliermaterial umgeben sind (DE-OS 36 41 706).

Geräte mit derartigen Vorrichtungen sind beispielsweise Aufroller, in denen eine elektrische Leitung auf einer Spule aufgewickelt ist. Die Leitung kann aus dem Gehäuse des Gerätes herausgezogen und unter der Wirkung einer Feder nach Fortfall der Zugkraft automatisch wieder aufgerollt werden. Bei dem Gerät kann es sich auch um die Stromzuführung für einen Prallschutz für Kraftfahrzeuge handeln, bei dem eine elektrische Leitung im Lenkrad eines Kraftfahrzeugs untergebracht ist. Ein wesentliches Problem bei diesen Geräten ist die Stromübertragung zwischen feststehenden und beweglichen Teilen. Dieses Problem tritt bei allen Geräten auf, bei denen zwei relativ zueinander bewegbare Endstellen vorhanden sind, von denen in den meisten Fällen eine als Festpunkt ausgebildet ist. Die für solche Fälle seit langem bekannten Schleifkontakte bzw. Schleifringe sind einem Verschleiß unterworfen und insbesondere bei niedrigen Stromstärken wegen der hohen schwankenden Übergangswiderstände nachteilig.

Bei der eingangs erwähnten, bekannten Vorrichtung nach der DE-OS 36 41 706 erfolgt die Stromübertragung durch die nach Art eines Federhauses gewickelte Flachbandleitung. Bei einer relativen Drehbewegung der beiden durch die Flachbandleitung verbundenen Endstellen "atmet" die aufgewickelte Flachbandleitung wie die Feder einer Uhr. Die Windungen werden in der einen Drehrichtung auf einen kleinen Durchmesser zusammengezogen. Sie gehen in der anderen Drehrichtung wieder auf einen größeren Durchmesser auf. Damit die gefalteten Enden dieser Flachbandleitung problemlos umspritzt werden können, sind dieselben von dem vorgefertigten, etwa L-förmigen Formteil mit U-förmigem Querschnitt umgeben, über dem ein durch Spritzen erzeugter Isolierkörper angebracht ist. Dadurch sind die Endstellen der Flachbandleitung mit ihren gefalteten Stellen einwandfrei mechanisch geschützt. Der Aufwand dafür ist jedoch relativ hoch, da das Formteil maßgenau hergestellt werden muß. Es ist außerdem sehr sorgfältig zu montieren, damit das umschlossene Ende der gefalteten Flachbandleitung an beiden Endstellen einwandfrei und ohne Versatz im Formteil liegt.

Der Erfindung liegt die Aufgabe zugrunde, die eingangs geschilderte Vorrichtung so weiterzubilden, daß die um 90° gefalteten Enden der Flachbandleitung mit einfachen Bauteilen, die auch einfach zu montieren sind, wirksam mechanisch geschützt sind.

Diese Aufgabe wird gemäß der Erfindung dadurch gelöst,
- daß über dem Anschlußende jeweils ein erster Formkörper aus gut biegbarem Isoliermaterial angebracht ist,
- daß das vorgefertigte Formteil einen als Klammer mit zwei durch einen Zwischenraum voneinander getrennten, federnd ausgebildeten Armen ausgeführten Klemmkörper aufweist, dessen Arme in Richtung des Anschlußendes der Flachbandleitung verlaufen und
- daß über dem Klemmkörper ein zumindest dessen am ersten Formkörper anliegende Arme fest umgebender, als starres Gehäuse ausgebildeter zweiter Formkörper angebracht ist, der Ausnehmungen aufweist und in montierter Position mit denselben über Vorsprünge des Klemmkörpers geschnappt ist.

Der Formteil mit dem Klemmkörper ist ein einfach herzustellendes und zu montierendes Bauteil. Er muß nicht mit großer Präzision gefertigt werden und kann relativ leicht auf ein gefaltetes Ende einer Flachbandleitung aufgesteckt werden. Das gilt auch für den ersten Formkörper, der zusammen mit den an demselben anliegenden klemmenden Armen des Klemmkörpers, die durch den zweiten, als starres Gehäuse ausgeführten Formkörper in ihrer Position gehalten werden, den wirksamen Schutz des gefalteten Endes der Flachbandleitung darstellt. Der erste Formkörper ist dabei zum Schutz der empfindlichen Flachbandleitung angebracht, damit die Arme des Klemmkörpers nicht direkt auf dieselbe drücken. Er dient andererseits als Knickschutz für die Flachbandleitung.

Vorteilhafte Ausgestaltungen der Erfindung gehen aus den Unteransprüchen hervor.

Ein Ausführungsbeispiel des Erfindungsgegenstandes ist in den Zeichnungen dargestellt.

Es zeigen:
Fig. 1 und 2 schematisch Querschnitte durch zwei unterschiedliche Geräte mit einer Vorrichtung nach der Erfindung.
Fig. 3 ein gefaltetes Ende einer Flachbandleitung in vergrößerter Darstellung.
Fig. 4 und 5 zwei unterschiedliche Ansichten eines auf das Ende der Flachbandleitung aufzubringenden Formteils.
Fig. 6 einen über dem Formteil anzubringenden Formkörper im Schnitt.
Fig. 7 einen Ausschnitt aus Fig. 5 in vergrößerter Darstellung.
Fig. 8 eine Endstelle der Flachbandleitung in fertigem Zustand.
Fig. 9 einen Schnitt durch Fig. 8 entlang der Linie IX - IX.

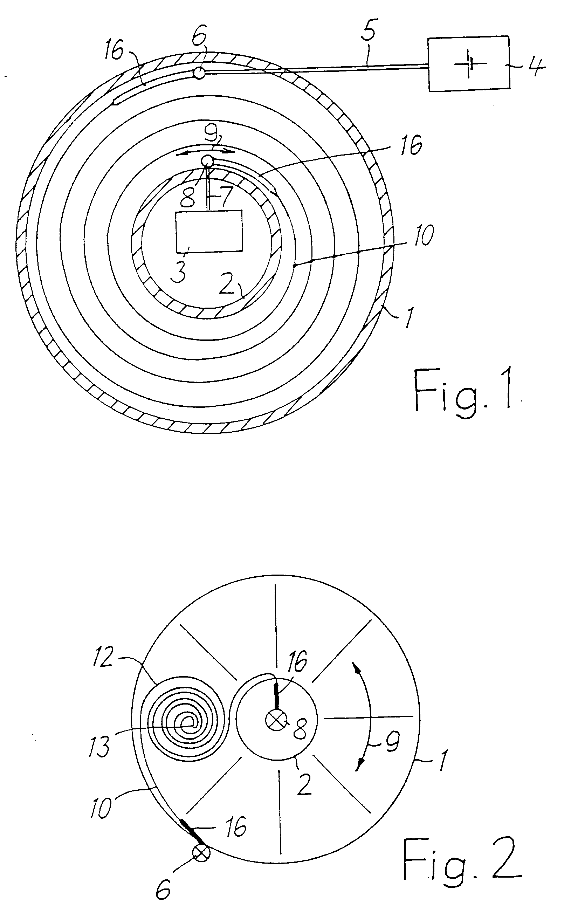

In Fig. 1 sind schematisch zwei beispielsweise kreisförmig ausgebildete Wände 1 und 2 des Gehäuses eines elektrischen Geräts dargestellt. Dieses Gerät kann beispielsweise ein Steuergerät für den Prallschutz von Kraftfahrzeugen sein. Es kann in die Lenkspindel eines Kraftfahrzeugs eingebaut sein. Zur Stromversorgung einer Elektronik 3 dieses Geräts ist dasselbe an die Batterie 4 des Fahrzeugs angeschlossen. Die Batterie 4 ist über eine elektrische Leitung 5 mit einer als Festpunkt ausgeführten Endstelle 6 verbunden. Die Elektronik 3 ist über eine elektrische Leitung 7 an eine Endstelle 8 angeschlossen, die in Richtung des Doppelpfeiles 9 bewegbar ist. Zwischen den beiden Endstellen 6 und 8 ist eine Flachbandleitung 10 angebracht, die im folgenden der Einfachheit halber als "FBL 10" bezeichnet wird. Die FBL 10 ist im dargestellten Ausführungsbeispiel mit zwei Leitern 11 versehen. Sie kann aber auch mehr als zwei Leiter aufweisen.

Die FBL 10 kann gemäß Fig. 1 zwischen den beiden Endstellen 6 und 8 in mehreren Windungen, also nach Art eines Federhauses von Uhren, angeordnet sein. Obwohl die Anzahl der Umdrehungen eines Lenkrades auf etwa sechs Umdrehungen begrenzt ist, sollen wesentlich mehr als sechs Windungen für die FBL 10 vorgesehen sein. Die Drehbewegung der Endstelle 8 macht sich dann für eine einzelne Windung der FBL 10 nicht wesentlich bemerkbar. Es wird lediglich der Durchmesser des aus allen Windungen der FBL 10 bestehenden Wickels verkleinert bzw. vergrößert.

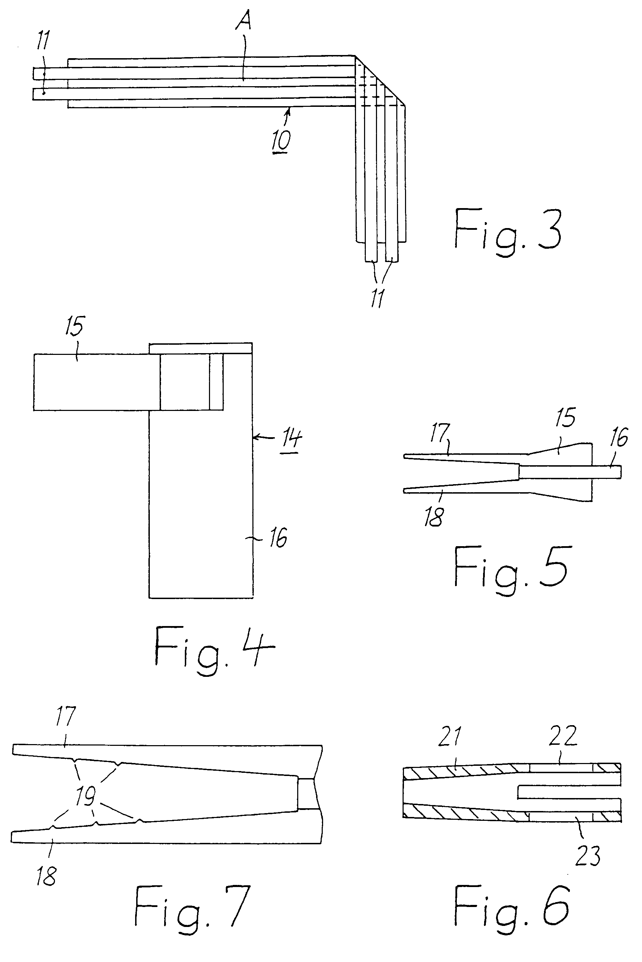

Die FBL 10 ist vorzugsweise mit flachen Leitern 11 ausgerüstet, so daß sich eine sogenannte Flachleiter-Bandleitung ergibt. Diese Ausführungsform ist wegen der Leiterform besonders dünn und nimmt daher sehr wenig Raum ein. Grundsätzlich könnte die FBL 10 aber auch mit runden Leitern ausgeführt sein. Die Leitungsenden sind durch Faltung der FBL 10 um 90° abgeknickt, so wie es in Fig. 3 dargestellt ist. Es ist dadurch ein Anschlußende A gebildet, das rechtwinklig vom in Windungen verlaufenden Teil der FBL 10 absteht und an dessen freien Enden die Leiter 11 zum Anschluß weiterführender Leitungen zur Verfügung stehen. Es kann an den freien Enden ein Teil eines Steckerverbinders angebracht sein. Die FBL 10 kann in den Anschlußenden A auch geteilt sein. Das bietet sich insbesondere dann an, wenn mehr als zwei Leiter 11 in der FBL 10 vorhanden sind.

Die FBL 10 kann zwischen den beiden Endstellen 6 und 8 gemäß Fig. 2 auch als Bifilarspule 12 gewickelt sein. In der Bifilarspule 12 ist die FBL 10 etwa in ihrer Mitte umgebogen, so daß sich eine Umkehrstelle 13 ergibt. Von dort aus ist die FBL 10 zweilagig gewickelt. Wenn an ihren beiden Enden in entgegengesetzter Richtung gezogen wird, verkleinert die durch das Wickeln entstandene Bifilarspule 12 ihren Durchmesser. Infolge der Elastizität der FBL 10 wickelt sie sich wieder auf, wenn die an ihren Enden angreifenden Zugkräfte fortfallen. Der Durchmesser der Bifilarspule 12 in der Ausgangsstellung der Vorrichtung wird zweckmäßig so gewählt, daß er gleich dem kürzesten Abstand der beiden Endstellen 6 und 8 voneinander oder kleiner als dieser Abstand ist.

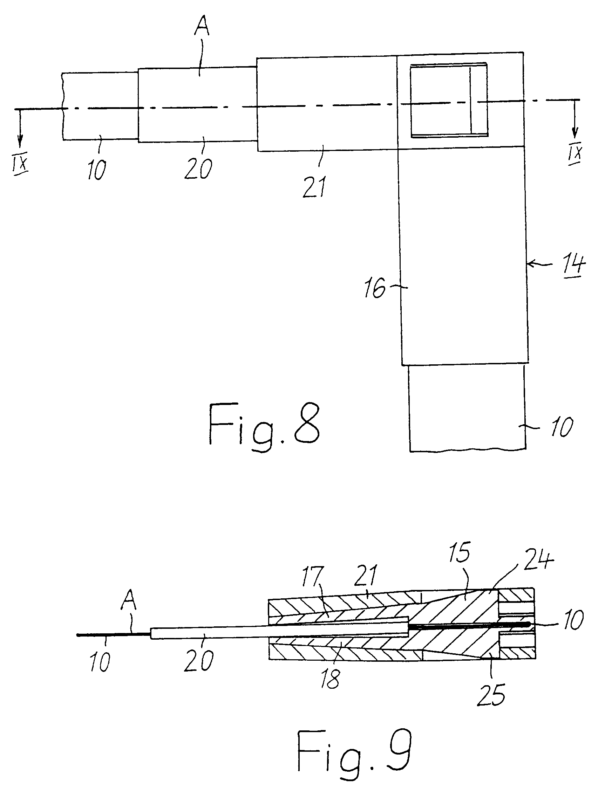

Das in Fig. 3 dargestellte Ende der FBL 10 ist an beiden Endstellen 6 und 8 von einem Formteil 14 umgeben, das gemäß Fig. 4 aus einem Klemmkörper 15 und einer rechtwinklig zu demselben verlaufenden Hülle 16 besteht. In montierter Position nach Fig. 8 ragt der Klemmkörper 15 in Richtung des Anschlußendes A der FBL 10, während die Hülle 16 den in Richtung der Windungen verlaufenden Teil der FBL 10 umschließt. Die Hülle 16 kann schwach gekrümmt verlaufen, entsprechend dem Radius der Wände 1 und 2 des Gehäuses, in das die FBL 10 eingebaut ist.

Der Klemmkörper 15 ist gemäß Fig. 5 als Klammer ausgeführt, die zwei federnd ausgebildete Arme 17 und 18 hat. Die im Zwischenraum zwischen den Armen 17 und 18 liegenden Oberflächen derselben können entsprechend Fig. 7 mit Vorsprüngen 19 ausgerüstet sein. Die federnden Arme 17 und 18 sind in montierter Position so zusammengedrückt, wie es aus Fig. 9 hervorgeht. Sie liegen in dieser Position fest an einem ersten Formkörper 20 an, der um das Anschlußende A der FBL 10 herumgeformt ist und als mechanischer Schutz für dieselbe dient. Zur sicheren Halterung des Formkörpers 20 im Klemmkörper 15 dienen die Vorsprünge 19 an den Armen 17 und 18.

Der erste Formkörper 20 besteht aus gut biegbarem Isoliermaterial. Es kann sich beispielsweise um einen Schlauch aus Polyvinylchlorid handeln, der zweckmäßig vor seiner Montage zu einem flachen Gebilde geformt ist, damit er einfach auf die FBL 10 aufgeschoben werden kann. Der Formkörper 20 stellt gleichzeitig einen wirksamen Knickschutz für die FBL 10 dar.

Zur Festlegung der Arme 17 und 18 in ihrer Montageposition wird ein zweiter Formkörper 21 verwendet, so wie er beispielsweise aus Fig. 6 hervorgeht. Dieser als starres Gehäuse ausgeführte Formkörper 21 wird über den Klemmkörper 15 geschoben. Er schnappt in der Endposition mit seinen Ausnehmungen 22 und 23 über Vorsprünge 24 und 25 des Klemmkörpers 15. Die Arme 17 und 18 sind dann fest in ihrer aus Fig. 9 ersichtlichen Lage gehalten. Am Formkörper 21 können auch Ansätze angebracht sein, durch welche derselbe beweglich im Gehäuse des Geräts gelagert werden kann, in das die FBL 10 eingebaut wird.

## Patentansprüche

1. Vorrichtung zur Stromübertragung zwischen zwei Endstellen, zwischen denen eine der elektrischen Verbindung dienende, in Windungen verlaufende Flachbandleitung (10) mit mindestens zwei elektrischen Leitern angeordnet ist, deren Länge wesentlich größer als der Abstand der beiden Endstellen voneinander ist, bei welcher mindestens eine der beiden Endstellen relativ zu der anderen bewegbar ist, bei welcher die Enden der Flachbandleitung (10) an den Endstellen zur Bildung von Anschlußenden um 90° gefaltet sind und bei welcher die gefalteten Enden der Flachbandleitung (10) jeweils von einem vorgefertigten Formteil (14) aus Isoliermaterial umgeben sind,
dadurch gekennzeichnet,
- daß über dem Anschlußende (A) jeweils ein erster Formkörper (20) aus gut biegbarem Isoliermaterial angebracht ist,
- daß das vorgefertigte Formteil (14) einen als Klammer mit zwei durch einen Zwischenraum voneinander getrennten, federnd ausgebildeten Armen (17,18) ausgeführten Klemmkörper (15) aufweist, dessen Arme (17,18) in Richtung des Anschlußendes (A) der Flachbandleitung (10) verlaufen und
- daß über dem Klemmkörper (15) ein zumindest dessen am ersten Formkörper (20) anliegende Arme (17,18) fest umgebender, als starres Gehäuse ausgebildeter zweiter Formkörper (21) angebracht ist, der Ausnehmungen (22,23) aufweist und in montierter Position mit denselben über Vorsprünge (24,25) des Klemmkörpers (15) geschnappt ist.

2. Vorrichtung nach Anspruch 1, dadurch gekennzeichnet, daß an dem Formteil (14) eine gegenüber dem Klemmkörper (15) um 90° versetzte, die in Richtung der Windungen weisende Flachbandleitung (10) umschließende Hülle (16) angebracht ist.

3. Vorrichtung nach Anspruch 1 oder 2, dadurch gekennzeichnet, daß die Hülle (16) schwach gekrümmt ist.

4. Vorrichtung nach einem der Ansprüche 1 bis 3, dadurch gekennzeichnet, daß an den im Zwischenraum zwischen den Armen (17,18) des Klemmkörpers (15) liegenden Oberflächen derselben Vorsprünge (19) angebracht sind.

5. Vorrichtung nach einem der Ansprüche 1 bis 4, dadurch gekennzeichnet, daß der erste Formkörper (20) als Schlauch ausgebildet ist.

## Claims

1. Device for transmitting current between two terminals, between which a ribbon line (10) is arranged which is used as the electrical connection, extends in turns and has at least two electrical conductors, the length of which is significantly greater than the distance between the two terminals, in which at least one of the two terminals can be moved relative to the other one, in which the ends of the ribbon line (10) at the terminals are folded by 90° for forming terminating ends and in which the folded ends of the ribbon line (10) are in each case surrounded by a prefabricated moulded part (14) of insulating material, characterized
- in that a first moulded body (20) of readily flexible insulating material is placed over the terminating end (A) in each case,
- in that the prefabricated moulded part (14) exhibits a clamping body (15) constructed as clamp having two elastically constructed arms (17, 18) separated from one another by an intermediate space, the arms (17, 18) of which extend in the direction of the terminating end (A) of the ribbon line (10), and
- in that over the clamping body (15), a second moulded body (21) is placed which is constructed as rigid housing, firmly surrounds at least its arms (17, 18) resting against the first moulded body (20) and exhibits recesses (22, 23) and is snapped with these over projections (24, 25) of the clamping body (15) in the assembled position.

2. Device according to Claim 1, characterized in that a sleeve (16) which is offset by 90° with respect to the clamping body (15) and encloses the ribbon line (10) pointing in the direction of the turns is attached to the moulded part (14).

3. Device according to Claim 1 or 2, characterized in that the sleeve (16) is slightly curved.

4. Device according to one of Claims 1 to 3, characterized in that projections (19) are attached to the surfaces of the arms (17, 18) located in the intermediate space between the arms (17, 18) of the clamping body (15).

5. Device according to one of Claims 1 to 4, characterized in that the first moulded body (20) is constructed as a hose.

## Revendications

1. Dispositif de transmission du courant entre deux bornes entre lesquelles est disposé un ruban conducteur plat (10) qui sert à la liaison électrique, qui présente l'allure de spires et contient au moins deux conducteurs électriques dont la longueur est sensiblement supérieure à la distance entre les deux bornes, dispositif dans le cas duquel au moins l'une des deux bornes est mobile par rapport à l'autre, dans le cas duquel les extrémités du ruban conducteur plat (10) sont repliées à 90° aux bornes pour former les extrémités de raccordement et dans le cas duquel les extrémités, repliées, du ruban conducteur plat (10) sont chacune entourées par une pièce de forme préfabriquée (14) en matériau isolant,
dispositif caractérisé par le fait
- qu'au-dessus de chacune des extrémités de raccordement (A) est rapporté un premier élément de forme (20) en un matériau isolant pouvant bien se cintrer,
- que la pièce de forme préfabriquée (14) présente un élément de bridage (15) qui est réalisé sous forme de pince avec deux bras (17,18) séparés l'un de l'autre par l'espace intermédiaire et conçus élastiquement, et dont les bras (17,18) sont orientés en direction de l'extrémité de raccordement (A) du ruban conducteur plat (10) et
- que par-dessus l'élément de bridage (15) est rapporté un second élément de forme (21) qui est conçu sous forme d'enveloppe rigide entourant de façon ferme au moins les bras (17,18) de l'élément de bridage qui s'appuient contre le premier élément de forme (20), qui présente des évidements (22,23) et qui, en position montée, se clipse par eux par l'intermédiaire des saillies (24,25) de l'élément de bridage (15).

2. Dispositif selon la revendication 1, caractérisé par le fait que sur la pièce de forme (14) est rapportée une gaine (16) qui est décalée de 90° par rapport à l'élément de bridage (15) et qui enserre le ruban conducteur plat (10) dans la direction des spires.

3. Dispositif selon la revendication 1 ou 2, caractérisé par le fait que la gaine (16) est faiblement courbée.

4. Dispositif selon l'une des revendications 1 à 3, caractérisé par le fait que sur les surfaces des bras (17,18) situées dans l'espace intermédiaire existant entre ces bras de l'élément de bridage (15) sont prévues des saillies (19).

5. Dispositif selon l'une des revendications 1 à 4, caractérisé par le fait que le premier élément de forme (20) est conçu sous forme de tube souple.
